# EUROPEAN PATENT APPLICATION

(11) **EP 0 690 097 A2**
(43) Date of publication of application: **03.01.1996**
(21) Application number: 95304062.3
(22) Date of filing: 13.06.1995
(51) Int. Cl.: C08L 71/12, C08K 5/521

(54) **Polyphenylene ether resin composition**

(30) Priority: 30.06.1994 JP 170417/94
(71) Applicant: GENERAL ELECTRIC COMPANY, Schenectady, NY 12345 (US)
(72) Inventor: Inoue, Kazunari, Moka City, Tochigi Prefecture (JP)
(74) Representative: Szary, Anne Catherine

(57) **Abstract**

A polyphenylene ether (PPE) resin composition with a modified resistance to light and good fire retardance comprises 0.1-15 parts by weight of phosphoric acid ester compound of the following formula for 100 parts by weight of (A) PPE resin and/or polystyrene resin 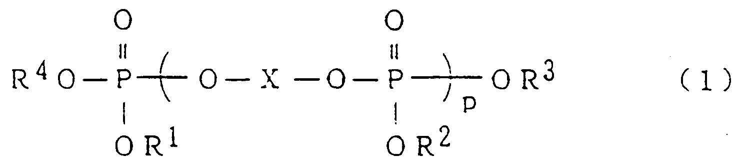
in which R¹, R, R³ and R⁴ are individually hydrogens, halogens or organic groups, and at least one of R¹, R, R³ or R⁴ is a residue derived from an ultraviolet adsorbent, X is a bivalent organic group, and p is an integer with a value of 0-10.

## Description

### Industrial application field

This invention is concerned with a polyphenylene ether (from now on called PPE) resin composition; in detail, this invention is concerned with a PPE resin composition containing a phosphoric acid ester compound containing a residue derived from an ultraviolet adsorbent.

### Conventional technology

PPE resin has good mechanical properties, good electric properties and high heat resistance, and has been used for various applications. In particular, PPE resins blended with polystyrene (from now on called PS) resin has good processability and has been used for various applications involving injection molding.

Because PPE resins had unsatisfactory resistance to light, the resin surface was discolored by exposure to light for an extended time, resulting in discoloration. In order to solve this problem, various types of stabilizers conventionally have been added. An example is the method of using additives described in Japanese Kokai Patent Application Nos. Sho 59[1984]-8752 and Sho 59[1984]-8751. However, because the stabilizers decomposed and scattered while they were melted and kneaded in making the composition, the light resistance was not improved efficiently. When large amounts were used, both the heat resistance and mechanical properties were worsened.

In order to obtain fire-retardant characteristics for either the PPE resin or PPE/PS resin composition, or to modify the processability, it was known that an aromatic phosphoric acid ester such as a triphenyl phosphate could be added (Japanese Kokai Patent Application No. Sho 53[1978]-418) or a polyphosphoric acid ester could be added (Japanese Kokai Patent Application No. Sho 55[1980]-118957). In order to improve the fire-retardant properties, a phosphorus compound containing an aromatic phosphoric acid ester containing a hydroxy group was used (Japanese Kokai Patent Application No. Hei 5[1993]-117486, Hei 5[1993]-148403, and Hei 5[1993]-247355.

Both the fire retardance and the processability of the resin composition were modified by adding a fire retardant such as an aromatic phosphoric acid ester or an aromatic phosphoric acid ester containing hydroxy groups; on the other hand, the resin composition liquid adhered to the product or to the mold in the molding process. The liquid not only damaged the appearance of the product but also had an adverse influence on secondary processes such as coating or adhesion. When it adhered to the mold, the mold could be damaged. When a minimal amount of the aromatic phosphoric acid ester or aromatic phosphoric acid ester liquid adhered; on the other hand, the fire-retardant properties were diminished.

The purpose of this invention is to provide a PPE resin composition having both a modified resistance to light and good fire retardance, while maintaining the other good properties of the PPE resin.

### Means to solve the problems

The inventors completed their research on the modification of the PPE resin properties, and found that a composition having both high resistance to light and good properties with regard to fire retardance, could be made by adding an organic phosphoric acid ester compound containing a residue derived from an ultraviolet adsorbent in its structure. Thus, they completed this invention.

This invention provides a polyphenylene ether resin composition. characterized by containing 100 parts by weight of (A) polyphenylene ether resin and/or polystyrene resin and 0.1 to 15 parts by weight of (B) phosphoric acid ester compound of formula (I): 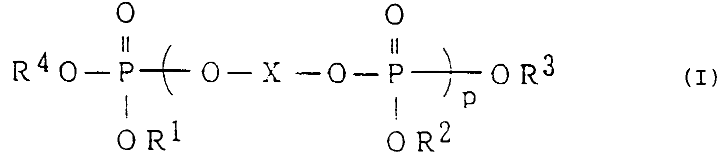
in which R¹, R, R³ and R⁴ are individually hydrogen, halogen, or organic groups, and at least one of R¹, R, R³ and R⁴ is a residue derived from an ultraviolet adsorbent, X is a bivalent organic group, and p is an integer with a value of 0-10.

Any conventional PPE resin can be used for this invention. Examples of PPE resins include any polymer of formula (II) : 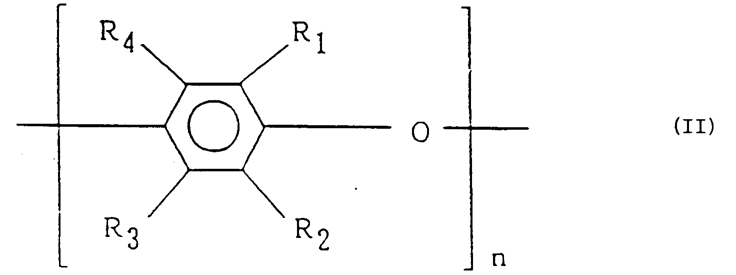
in which R¹, R, R³ and R⁴ are individually hydrogen, halogen, alkyl groups, alkoxy groups, or either haloalkyl or haloalkoxy groups containing at least two carbons between the halogen and the phenyl ring; they are also monovalent substituents containing no tertiary α-carbon, and n is an integer indicating the degree of polymerization , and they may be one of the polymers described by the above-mentioned formula, or a copolymer of the polymers. Preferred examples of alkyl groups include alkyl groups containing R¹ and R, both of which individually have the same carbon number of 1-4, and R³ and R⁴, which are either hydrogens or have carbon numbers of 1-4. Examples include poly(2,6-dimethyl-1,4-phenylene) ether, poly(2,6-diethyl-1,4-phenylene) ether, poly(2-methyl-6-ethyl-1,4-phenylene) ether, poly(2-methyl6-propyl-1,4-phenylene) ether, poly(2,6-dipropyl-1,4-phenylene) ether, and poly (2ethyl6-propyl-1,4-phenylene) ether. Examples of PPE copolymers include copolymers that contain some alkyl trisubstituted phenols, such as 2,3,6-trimethylphenol, in the above-mentioned polyphenyl ether repeating unit. A copolymer made by grafting a styrene compound with PPE may be included in the examples. Examples of styrene-compound-grafted polyphenylene ethers include copolymers made by graft polymerizing styrene compounds such as styrene, a-methylstyrene, vinyltoluene, or chlorostyrene, with the above-mentioned PPE.

Either the above-mentioned polyphenylene ether resin and/or a polystyrene resin is used as the component (A). Polystyrene resins are known, and must contain 25 wt% or more repeating (structure) units derived from the aromatic vinyl compound of the following formula (III) : 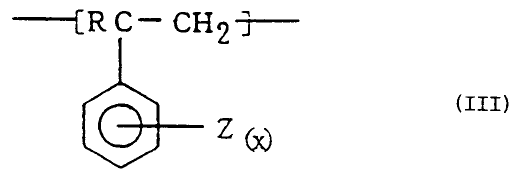
in which R is hydrogen or an alkyl group with a carbon number of 1-4 , Z is halogen or an alkyl group with a carbon number of 1-4, and x is an integer with a value of 0-5 in the polymer. Examples of the styrene polymer include both polymers such as styrene or its derivative (p-methylstyrene, α-styrene, α-methyl-p-methylstyrene, chlorostyrene. bromostyrene) and copolymers. Rubber-modified polystyrene (HIPS) made of 70-99 wt% of the above-mentioned aromatic vinyl compound and 1-30 wt% of diene rubber can be used. Examples of diene rubbers consisting of HIPS include polymers of conjugated diene compounds such as butadiene, isoprene and chloroprene, copolymers of conjugated diene compounds and either unsaturated nitrile compounds or aromatic vinyl compounds, and natural rubber. They can be used alone, or two or more may be combined. In particular, polybutadiene or butadiene-styrene copolymers are preferred.

HIPS is made by emulsion polymerization, suspension polymerization, bulk polymerization, solution polymerization or their combination.

When PPE resin is combined with PS resin, the combination ratio can be desirably chosen. A suitable combination ratio of PPE resin to PS resin is 10-100 parts by weight to 90-0 part by weight, preferably 10-90 parts by weight to 90-10 parts by weight.

Examples of phosphoric acid ester compounds containing a residue derived from an ultraviolet adsorbent that can be used as component (B) for this invention are described by the above-mentioned formula (1). The above-mentioned formula (1) must contain R¹, R, R³ and R⁴, at least one of which is required to be a residue derived from an ultraviolet adsorbent. The residue is preferably derived from an ultraviolet adsorbent selected from hydroxy-group-containing compounds such as benzotriazole, benzophenone, and salicylic acid. Examples of benzotriazole compounds include 2-(2'-hydroxy-3'-5'-di-t-butylphenyl)-5-chlorobenzotriazole; 2-(2'-hydroxy-3'-t-butyl-5'-methylphenyl)-5-chlorobenzotriazole; 2-(2'-hydroxy-3'-t-amyl-5'-isobutylphenyl)-5-chlorobenzotriazole; 2-(2'-hydroxy-3'-isobutyl-5'-methylphenyl)-5-chlorobenzotriazole; 2-(2'-hydroxy-3'-isobutyl-5'-methylphenyl)-5-chlorobenzotriazole; 2-(2'-hydroxy-3'-5'-di-t-butylphenyl)benzotriazole; 2-(2'-hydroxy--5'-methylphenyl)benzotriazole; 2-(2'-hydroxy-5'-(1,1,3,3-tetramethylbutyl)phenyl)benzotriazole 2-(2'-hydroxy-5'-t-octylphenyl)benzotriazole).

Examples of benzophenone compounds include: 2,2'-dihydroxy-4-methoxybenzophenone; 2,2'-dihydroxy-4,4'-dimethoxybenzophenone; 2,2',4,4'-tetrahydroxybenzophenone; 2-hydroxy-4-methoxybenzophenone; 2,4-dihydroxybenzophenone; 2-hydroxy-4-octyloxybenzophenone.

Examples of salicylic acids include phenyl and para-octylphenyl salicylate.

The ultraviolet adsorbent can be used alone, or two or more may be combined. Especially preferable ultraviolet adsorbents are either benzotriazole or benzophenone compounds.

When R¹, R, R³ and R⁴ are not residue derived from the above-mentioned ultraviolet adsorbents, but rather organic groups, examples of the organic groups include alkyl groups, arylalkyl groups, alkylaryl groups, and aryl groups. An alkyl group with a carbon number of 4-15 is preferred, and examples of preferable alkyl groups include butyl groups, hexyl groups, octyl groups, nonyl groups, decyl groups, and tridecyl groups. They may be linear or branched. Examples of arylalkyl groups include benzyl groups and phenylethyl groups. Examples of alkylaryl groups include cresyl groups, xylyl groups, ethylphenyl groups, and t-butylphenyl groups. Examples of aryl groups include phenyl groups and naphthyl groups. Examples of especially preferable groups include (phenyl-lower-alkyl) groups such as phenyl groups, benzyl groups and phenylethyl groups and (lower-alkyl-phenyl) groups such as cresyl groups, xylyl groups, ethylphenyl groups and t-butyl phenyl groups.

In the above-mentioned formula (I), X is a bivalent organic group. Examples of organic groups include the same bivalent groups as the above-mentioned examples of organic groups, except for containing fewer hydrogens (two) bonded to the carbon than in the above-mentioned examples. Examples include alkylene groups, cycloalkylene groups, and arylene groups. Phenylene groups (which may be substituted with a hydroxy group or an alkyl group) and polynuclear phenylene groups (biphenylene groups or groups derived from bisphenol) are preferred. The relative position of the two free valences is not specifically restricted. Preferred examples of -O-X-O- moieties include those derived from hydroquinone, resorcinol, bis(hydroxyphenyl)methane, 2,2-bis(hydroxyphenyl)propane (bisphenol A), dihydroxydiphenyl, p,p'-dihydroxydiphenylsulfone and dihydroxynaphthalene. A group derived from either a phenylene group, which may be substituted, or bisphenol. is especially preferred.

A phosphoric acid ester compound described by the above-mentioned formula (I), in which R¹, R, R³ or R⁴ is a residue derived from an ultraviolet adsorbent, the others are phenyl groups, and X is either a phenylene group, which may be substituted. or a group derived from bisphenol. is especially preferred.

In the above-mentioned formula (I), p is an integer with a value of 0-10, preferably 0-2.

The above-mentioned component (B) (phosphoric acid ester compound) may be made by any method. The compound can be made by condensing a suitable hydroxy compound with a halide of a suitable phosphorus compound. Specific amounts of a diphenol compound of HO-X-OH (bisphenol A) and an organic phosphochloridate containing groups equivalent to R¹-R⁴, are dissolved in an aromatic solvent such as benzene or toluene; then the reaction is carried out at 40-80°C in the presence of a dechlorinating agent. In this case, residue derived from ultraviolet adsorbents are introduced by using an organic phosphochloridate made by carrying the reaction of a hydroxy compound containing a group equivalent to R¹-R⁴ (except for an ultraviolet adsorbent compound containing a hydroxy group) with an ultraviolet adsorbent compound containing a hydroxy group.

Once a hydroxy compound containing a group equivalent to R¹-R⁴ is mixed with a diphenol compound, the reaction can be carried out by adding phosphorus oxychloride. Ester exchange can also be used.

The amount of component (B) (phosphoric acid ester compound) to be used is suitably 0.1-15 parts by weight per 100 parts by weight of the above-mentioned component (A). The minimal amount is preferably 0.5. When less than the above-mentioned minimal amount of component (B) is used, both unsatisfactory resistance to light and unsatisfactory properties with regard to fire retardance are obtained. When more than the above-mentioned maximum amount is used, both the thermal resistance and the mechanical properties are worsened.

Conventional phosphoric acid ester compounds such as triphenyl phosphate (TPP), resorcinol tetraphenyl diphosphate, bisphenol A tetraphenyl diphosphate and conventional ultraviolet adsorbents, can be used for the composition of this invention.

Conventional additives such as pigments, dyestuffs, reinforcing agents (glass fiber (GF), carbon fiber, talc, mica, potassium titanate fiber), fillers (carbon black, silica, titanium oxide), heat resistance agents, antioxidants, weather resistant agents. lubricants, parting agents. nucleating agents, plasticizers, fluidization modifiers and antistatic agents can be added to the resin composition of this invention during mixing or molding, depending on the purpose. However. the properties of the resin composition must not be worsened.

Any method can be used for production of the resin composition of this invention. A conventional method can be suitably used. A melt mixing method is usually desirable. A minimal amount of solvent can be used; however, it is not required. Apparatuses such as extruders, Banbury mixers, rollers and kneaders are especially suitable for use in either a batch operation or a continuous operation. The components can be mixed in any order.

### Application examples

In the following, the details of this invention are explained with application examples. However, this invention is not specifically restricted.

The following compounds were used for the application examples.

### Component (A)

PPE: Poly(2,6-dimethyl-1,4-phenylene) ether with an intrinsic viscosity of 0.47 dL/g (chloroform. at 30°C), made by Nippon GE Plastic K.K (from now on called PPE)

PS: Toporex 870-ST (brand, made by Mitsui Toatsu Chemicals. Inc., high-impact polystyrene) (from now on called HIPS)

### Component (B)

P-1: A phosphoric acid ester compound of the following formula (IV) : 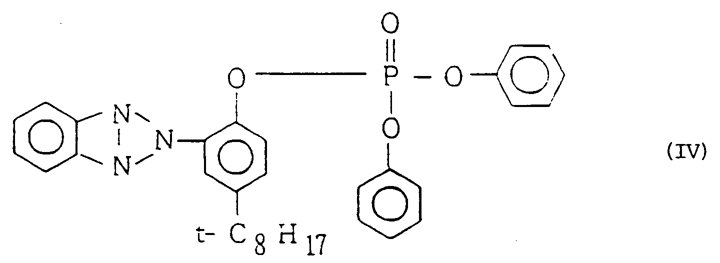
was made in the following process.

94.1 g of phenol, 161.5 g of a compound of the following formula (V), and 130 g of pyridine were placed in a three-necked flask with a stirrer, a condenser and a dropping funnel. Then, after 76.7 g of phosphorus oxychloride were added dropwise, a reaction was carried out for 4 h. The reacted solution was washed with water to remove the hydrochlorides, then dried in vacuum. A compound of the above-mentioned formula (IV) was made.

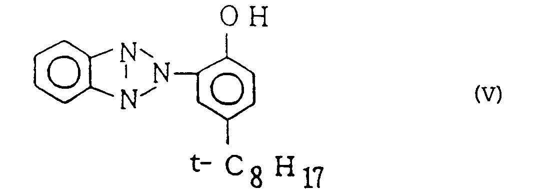

P-2: The phosphoric acid ester compound of the following formula (VI): 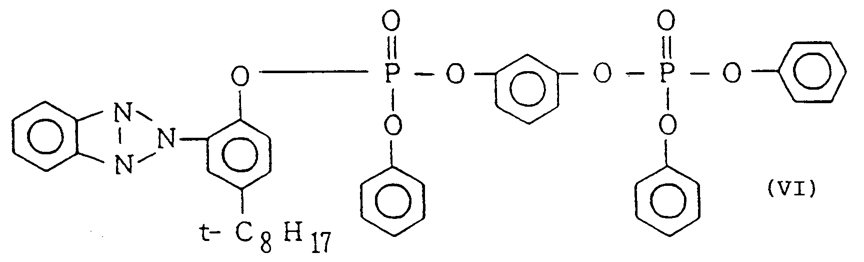
was made in the following process.

Except for using 70.6 g of phenol, 27.5 g of resorcinol, 139 g of a compound of formula (V), 130g of pyridine and 161.5g of phosphorus oxychloride, the same operation as the above-mentioned P-1 was done to make a compound of the above-mentioned formula (VI).

P-3: The phosphoric acid ester compound of the following formula (VII): 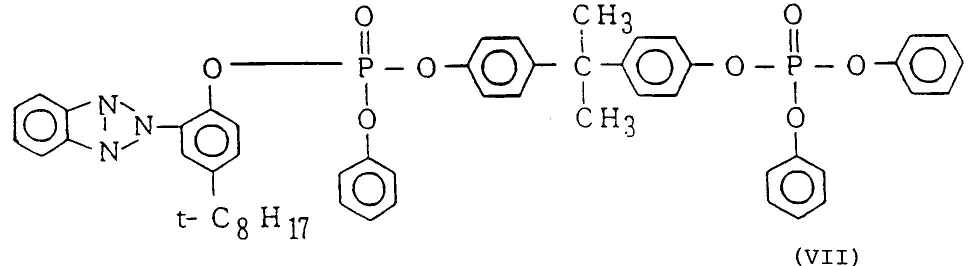
was made in the following process.

Except for using 70.6 g of phenol, 57 g of bisphenol #A, 139 g of compound of formula (V), 130g of pyridine and 161.5g of phosphorus oxychloride, the same operation as the above-mentioned P-1 was done. A compound of the above-mentioned formula (VII) was made.

P-4: The phosphoric acid ester compound of the following formula (VIII): 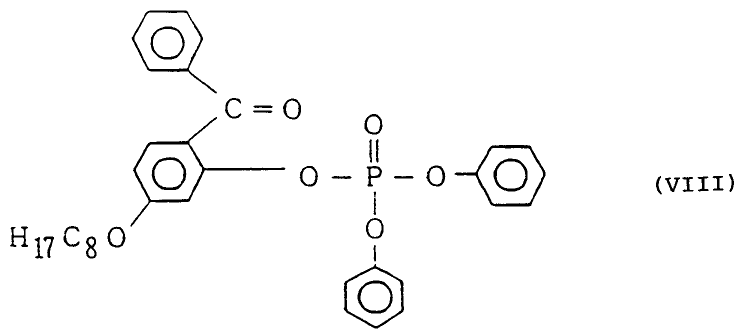
was made in the following process.

Except for using 70.6 g of phenol, 163 g of 2-hydroxy-4-octyloxybenzophenone, 130 g of pyridine, and 161.5 g of oxyphosphorus chloride, the same operation as the above-mentioned P-1 was done. A compound of the above-mentioned formula (VIII) was made. Ultraviolet adsorbent (used for comparison): A benzotriazole compound of the following formula (IX): 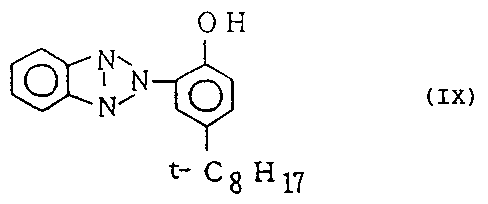
made by American Cyanamid, trade name : Cyasorb UV-5411 (from now on called BT)

### Optional components:

Triphenyl phosphate (TPP)
Titanium oxide (TiO₂)

### Application Examples 1 to 5 and Comparative Examples 1 and 2

The components whose combination ratios (weight ratios) are shown in Table I, were melted and kneaded at 280°C using a biaxial extruder to make pellets. Product pellets were used for injection molding to make various test samples. The following properties were evaluated. The results are shown in Table 1.
(1) Izod impact strength
   The measurement was based on ASTM D 256 and was done at 23°C with a notch. The thickness was 1/8 in.
(2) Heat deformation temperature (HDT)
   The measurement was based on ASTM D 648 at a load of 18.6 kg/cm.
(3) Light resistance
   An accelerated test was carried out using a fadometer with a black panel at a temperature of 63°C at a 0.39 W/m irradiation luminosity. The light was transmitted through a glass plate (3 mm thick). The color difference (ΔE) was measured. The smaller numerical values indicate a better resistance to light. The measurement was done three times (after irradiation for 100 h, 200 h and 300 h).

**Table I**

| Application example | | | | | | Comparative example | |
|---|---|---|---|---|---|---|---|
| | 1 | 2 | 3 | 4 | 5 | 1 | 2 |
| Component (parts by weight) | | | | | | | |
| PPE | 40 | 40 | 40 | 40 | 40 | 40 | 40 |
| HIPS | 60 | 60 | 60 | 60 | 60 | 60 | 60 |
| P-1 | 2.5 | - | - | - | 2.5 | - | - |
| P-2 | - | 2.5 | - | - | - | - | - |
| P-3 | - | - | 2.5 | - | - | - | - |
| P-4 | - | - | - | 2.5 | - | - | - |
| BT | - | - | - | - | 7.5 | 1.5 | - |
| TPP | - | - | - | - | 5 | - | - |
| TiO₂ | 5 | 5 | 5 | 5 | | 5 | 5 |
| Izod impact strength (kg • cm/cm) | 16.5 | 15.5 | 16.2 | 18.2 | 16.8 | 15.6 | 12.8 |
| HDT (°C) | 122 | 125 | 125 | 120 | 98 | 118 | 125 |
| Light resistance (ΔE) | | | | | | | |
| After 100 h | 1.13 | 1.06 | 1.06 | 1.3 | 1.57 | 1.25 | 2.54 |
| After 200 h | 4.59 | 5.61 | 4.9 | 5.8 | 2.89 | 5.9 | 10.56 |
| After 300 h | 10.97 | 11.18 | 11.5 | 12.3 | 4.59 | 15.5 | 16.32 |

The compositions of Application Examples 1-5 had good fire retardance.

As the PPE resin composition of this invention has modified resistance to light and good fire-retardance, the composition is industrially useful.

## Claims

1. A polyphenyl ether resin composition, characterized by containing 100 parts by weight of (A) a polyphenylene ether resin and/or polystyrene resin, and 0.1-15 parts by weight of (B) a phosphoric acid ester compound of formula (1): 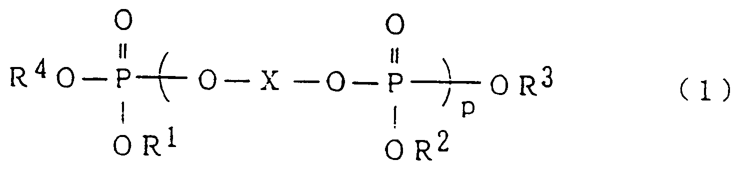 (in which R¹, R, R³ and R⁴ are individually hydrogen, halogen or organic groups, and at least one of R¹, R, R³ and R⁴ is a residue derived from an ultraviolet adsorbent, X is a bivalent organic group, and p is an integer with a value of 0-10).

2. The polyphenylene resin composition described in Claim 1 and involving the above-mentioned formula (1), in which a residue derived from an ultraviolet adsorbent that is selected from compounds that contain hydroxy groups, such as benzotriazole or benzophenone, is included.

3. A polyphenylene ether resin composition described in Claim 1 or 2 and involving the above-mentioned formula (1), in which at least one of R¹, R, R³ and R⁴ is either a residue derived from an ultraviolet adsorbent or a group selected from a phenyl group, (phenyl-lower-alkyl) group and a (lower-alkyl-phenyl) group.

4. A polyphenyl ether resin composition described in one of Claims 1-3 and involving the above-mentioned formula (1), in which an X selected from a phenyl group, which may be substituted, and bisphenol is included.

5. A polyphenyl ether resin composition, described in one of Claims 14 and involving the above-mentioned formula (1) in which R¹, R, R³ and R⁴, at least one of which is derived from an ultraviolet adsorbent (the others are phenyl groups), and X, which is a group selected from a phenylene group, which may be substituted, or bisphenol, are included.
